# EUROPEAN PATENT APPLICATION

(11) **EP 1 585 121 A1**
(43) Date of publication of application: **12.10.2005**
(21) Application number: 05300207.7
(22) Date of filing: 23.03.2005
(51) Int. Cl.: G11B 7/135, G11B 7/00

(54) **Device for reading and/or writing optical recording media**

(30) Priority: 06.04.2004 EP 04008273
(71) Applicant: Thomson Licensing, 92100 Boulogne Billancourt (FR)
(72) Inventor: Knittel, Joachim, 78532 Tuttlingen (DE)
(74) Representative: Thies, Stephan

(57) **Abstract**

The invention refers to a device for reading and/or recording optical recording media (9) having an optical pickup head (1) for scanning the optical recording medium (9) with a scanning beam (5), a photodetector (2) arranged remote from the optical pickup head (1) for detecting a received beam (11) received from the optical recording medium (9), and an optical fibre (3) arranged between optical pickup head (1) and photodetector (2) for guiding the received beam (11) to the photodetector (2).

It is an object of the invention to propose a device as described above being provided for transmitting control signals through the optical fibre.

According to the invention the optical fibre (3) is arranged off-axis with regard to the received beam (11).

## Description

The invention relates to a device for reading and/or writing optical recording media having an optical pickup head that is connected via an optical fibre to a photodetector. The pickup head of such device is compact and lightweight, however, it is difficult to transmit control signals through the fibre, as the fibre scrambles the spatial intensity distribution of a light beam transmitted through it.

It is an object of the invention to propose a device as described above being provided for transmitting control signals through the optical fibre.

According to the invention, the device for reading and/or recording optical recording media, such as CD, DVD or the like, having an optical pickup head for scanning the optical recording medium with a scanning beam, a photodetector arranged remote from the optical pickup head for detecting a received beam, which is received from the optical recording media and an optical fibre arranged between optical pickup head and photodetector for guiding the received beam of light to the photodetector comprises an optical fibre that is arranged off-axis with regard to the received beam. The off-axis arrangement makes possible to detect different spatial intensity distributions of the received beam even after having been guided through the optical fibre, which means having been reflected many times. Off-axis arrangement keeps the information of the non-uniform spatial intensity distribution, although not necessarily the identical distribution. Detection of non-uniform intensity distribution makes possible to generate a tracking and/or a focussing error signal or other error signals needed for optimum track following. The optical pickup head is provided for following the data tracks of the optical recording medium with a light beam, usually a laser light beam, for enabling reading and/or writing of data items.

The photodetector in this arrangement is arranged remote from the optical pickup head thus reducing the size of the optical pickup head and its weight, thus providing better scanning performance. Connection of photodetector and optical pickup head via optical fibre allows to detect the received light at a remote location from the optical pickup head. The received beam of light is generally light reflected from the optical recording medium, however, other types of received beam like a beam transmitted through the optical recording medium is also possible here.

Preferably, the optical fibre is a multimode optical fibre. Advantageously, this type of fibre keeps information of non-uniform spatial intensity distribution with very low or no distortion, even when the optical fibre is bent.

Advantageously, the photodetector is provided with detector elements that have the shape of an annular ring or annular zone shape. For fibres that keep the angle distribution between the symmetry axis of a fibre and the propagation direction of the received beam, but do not conserve the azimuthal behaviour, optimum photodetector design consists of annular or ring shaped detector zones for the detector elements. The detector elements may consist either of more or less ideal annular zones. However, they can also be made of a pixel area, where different zones are adaptively arranged by coupling different sets of detector element pixels.

Several annular zones are advantageously adaptively combined to form a super annular zone. Depending on different type of optical media and/or different wavelength of scanning beam or other parameters that are not constant for different circumstances, adaptively changing the radial dimension of the annular zone detector elements makes possible a flexible detector element change.

According to the invention the pickup head is advantageously provided with a diffractive optical element for focusing the received beam onto the entrance of the optical fibre. This has the advantage of optimised signal intensity, as all or nearly all of the received beam intensity is directed to the optical fibre, thus reducing loss to a minimum.

According to preferred embodiment, the pickup head is provided with a beam splitter for generating partial detection beams and an optical coupler for coupling the partial detection beams to the optical fibre. The beam splitter generates partial detection beams that are useful for generating different types of error signals, e.g. for different types of tracking and/or focusing methods. The beam splitter is preferably a diffractive optical element. The optical coupler generates a non-uniform intensity distribution sufficient for optimum transmission through the optical fibre. This distribution consists of different coupling angles α for different partial detection beams.

Preferably, the optical coupler consists of a diffractive optical element, a lens array, and a coupling lens. The diffractive optical element separates the partial detection beams on separate lenses of the lens array. The lens array collimates the partial detection beams and the coupling lens focuses the lens array output beams to the entrance of the optical fibre.

Further advantages and details of the invention can also be seen in the following description of preferred embodiments. It is submitted that the invention is not limited to the embodiments described. In the Figures:
- Fig. 1: shows a fibre coupled optical pickup head and detector of a device according to the invention,
- Fig. 2: shows the principle of a multimode optical fibre,
- Fig. 3: shows the spatial intensity distribution of a received beam,
- Fig. 4: shows a fibre coupled optical pickup head and detector of another embodiment of the invention,
- Fig. 5: shows a first example of a detector array, and
- Fig. 6: shows a second example of a detector array.

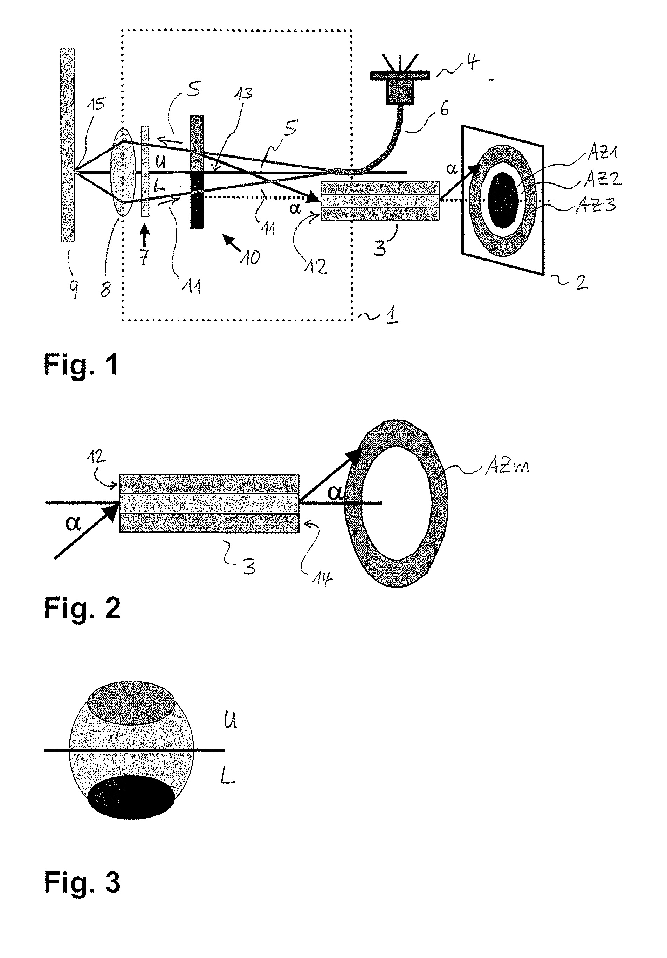

Fig. 1 shows a fibre coupled optical pickup head 1 and photodetector 2 of a device according to the invention. Optical pickup head 1 and photodetector 2 are connected via an optical fibre 3. A diode laser 4 generates a scanning beam 5, which is guided to the optical pickup head 1 via another optical fibre 6. The linear polarized light emitted by the fibre-coupled diode laser 4 is sent through a quarter wave plate 7 and focused by an objective lens 8 onto the optical recording medium 9. A polarizing diffractive optical element 10 is designed such that it does not influence the scanning beam 5, i.e. the light coming from the fibre-coupled diode laser 4. The light reflected by the optical recording medium 9, i.e. the received beam 11, is again sent through the objective lens 8, the quarter wave plate 7 and the collimator. Due to the quarter wave plate 7 the polarization of the received beam 11 is rotated by 90° relative to the scanning beam 5 and the polarizing diffractive optical element 10 influences the returning beam. This time the diffractive optical element 10 focuses the light onto the entrance 12 of the multi-mode fibre 3 that is situated slightly off the optical axis 13. Therefore, the light from the upper half U of the received beam 11 (grey section) and the lower half L of the received beam 11 (black section) are coupled with different coupling angles α into the fibre. The dotted line shows a coupling angle of 0° for the lowest part of the lower half, while the straight line arrow shows a coupling angle α for the uppermost part of the upper half. As the coupling angle is preserved through the fibre 3 the intensity distribution of the two halves can be separated by a photodetector 2 with suitable annular zones AZ1, AZ2, ..., AZn.

All elements described up to now, except the optical recording medium 9 belong to the fibre-coupled optical pickup. The scanning light is transmitted via a single-mode fibre 6 to the optical pickup head 1. In the back path the received light is coupled into the multi-mode fibre 3 using a polarizing diffractive optical element 10. The light from the upper half U enters the fibre 3 at an average angle of α, whereas the light from the lower half L enters the fibre 3 at an average angle of 0°. As the absolute value of the coupling angle is preserved through the optical fibre 3 a detector 2 with annular zones AZ1, ..., AZn is suited to separate the two halves U, L.

Fig. 2 shows the principle of a multimode optical fibre 3. In a perfect multimode step-index fibre the coupling angle α between the symmetry axis of the fibre and the principal propagation direction (axial angle) of a beam is conserved. Because there is no conservation behaviour in the azimuthal direction, the far field of the fibre output is distributed over annular zones AZ1, ..., AZn. Fig. 2 indicates that the cone angle α at the exit 14 of a multimode fibre 3 corresponds to the coupling angle α at the input at entrance 12.

The spatial intensity distribution of a received beam is shown in Fig. 3 where a typical intensity distribution (push-pull coils) in the pupil of the objective lens 8 is shown. The total intensity of the upper half U is different from the one in the lower half L and depends on the position of the focus spot 15 relative to the tracks on the optical disk 9. In general optical pickups use the push-pull signal for tracking: This signal is generated by measuring the asymmetric intensity distribution in the pupil of the objective lens 8. A typical intensity distribution is shown in the figure. The push-pull signal is obtained by comparing the intensity of the upper half U and the lower half L, i.e. (U-L)/(U+L).
By using different coupling angles α for upper half U and lower half L it is made possible to separate the two halves at the end of the multi-mode fibre 3, by using a detector with suitable annular zones AZ1, ..., AZn.

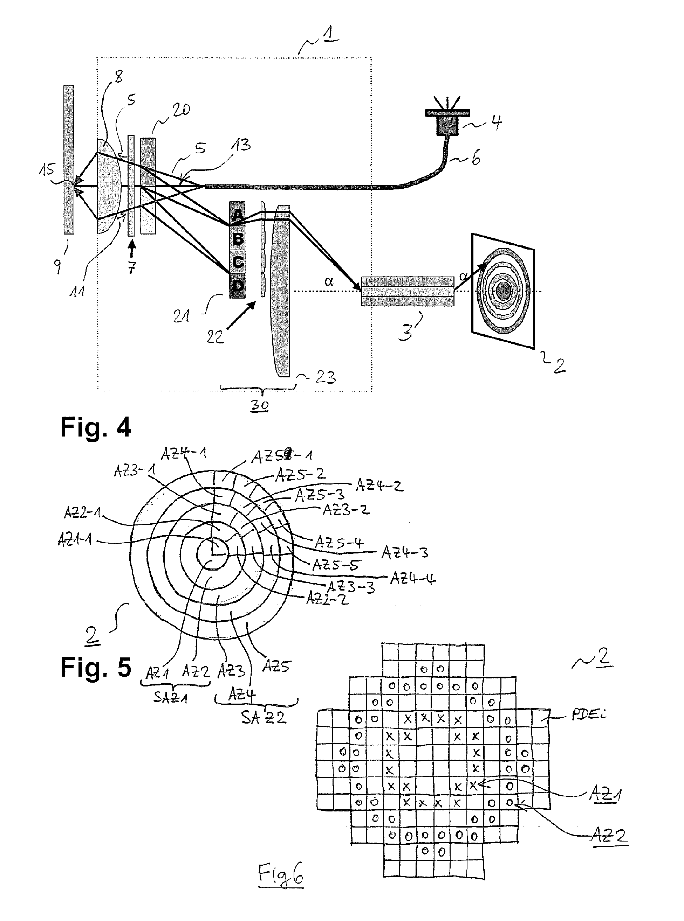

Fig. 4 shows another embodiment of a fibre coupled optical pickup head 1 and detector 2 according to the invention. Same elements as in Fig. 1 are indicated by the same reference numerals. The pick-up shown here generates tracking error signals via push-pull tracking method and focus error signals via the knife-edge method. Both methods are well known in the art. The received beam, i.e. the light reflected from the disk is send through the objective lens 8, which converts the diverging beam into a converging one. The diffractive optical element in this embodiment acts as a beam splitter 20 and splits this converging laser beam into two parts: upper half 11U and lower half 11L. These two resulting beams are focused onto a further diffractive optical element 21. This schematic is typical for systems that use the knife-edge focusing method. In a usual system using this focusing method a detector with four zones would be placed at the position of the diffractive optical element 21. To generate a data signal, a focus and a track error signal, the intensity of the four zones A, B, C, D marked on diffractive optical element 21 need to be detected separately. The following operations yield the desired signal from the four detector signals:
Data signal: A+B+C+D
Push-pull: (A+B)-(C+D)
Focus error: (A-B) + (D-C)

The invention describes a method how to transmit the four signals through a multi-mode fibre 3. Again the basic idea is to couple the light from the four zones A, B, C, D with different coupling angles α into the multi-mode fibre 3, so that each zone can be detected separately with a suitable detector 2 that has at least four annular zones AZ1, ..., AZn. In Figure 4 this is achieved using a diffractive optical element 21, a lens array and a lens 23 that is placedoff-axis with regard to the optical axis 13. Diffractive optical element 21, lens array 22 and lens 23 act together as optical coupler 30. The task of the diffractive optical element 21 is to separate the beams that impinge onto the four zones A, B, C and D. In zones A and C the light is deviated slightly upwards, in zones B, D the light is deviated slightly downwards.

The off-centering of the optical fibre with regard to the received beam is done in such a way that the upper region U of the pupil as seen in Fig. 3, and the lower region L enter the fibre with different absolute values. This makes it possible to detect the regions U and L separately.

Next the lens array 22 collimates each beam coming from zones A, B, C, D respectively individually and the off-axis situated focusing lens 23 directs each beam with a different coupling angle into the multimode fibre 3.

Fig. 5 shows an example of detector areas. The photodetector 2 consists of several annular shaped detector element zones AZ1, to AZ5. These annular zones may well be divided into smaller annular elements AZ1i, AZ2i, AZ3i, AZ4i, AZ5i as is exemplarily depicted in the upper right quadrant. Depending on different optical recording media, the distribution of angles α may be different. In this case, it is proposed to combine several annular zones AZi to form super annular zones SAZi. For example, annular zones AZ1 and AZ2 are combined to super annular zone SAZ1 while annular zones AZ3 to AZ5 are combined to super annular zone 2. In case of different optical conditions, another arrangement may be more suitable, for example annular zone AZ3 belongs to super annular zone SAZ1 while super annular zone SAZ2 just consists of annular zones AZ4 and AZ5.

Fig. 6 shows another example of detector areas. In this example the photodetector 2 consists of a large number of photodetector element pixels PDEi. These photodetector element pixels PDEi are adaptively combined to form annular zones AZi depending on the actual optical parameters. Such combination is schematically shown by indicating photodetector elements PDEi with a cross for annular zone AZ1 while photodetector elements PDEi indicated with a circle belong to another annular zone AZ2. In this example, the center is indicated as not belonging to an annular zone and there is also a boundary between annular zones AZ1 and AZ2. Existence and size of such unassigned areas depends on the optical parameters of a certain constellation and is selected appropriately.

In other words the invention refers to a method to transmit the tracking signal (push-pull) through an optical fibre 3. The introduction of an optical fibre 3 between the optical pickup head 1 and the source-detection element 2 is attractive because it has the potential to achieve compact, lightweight optical pickup heads 1. However, as it is difficult to transmit the control signals, i.e. focus error and tracking error, through the fibre 3 as the spatial intensity distribution generated by the interaction of the disk 9 and the focus spot 15 will be scrambled in the fibre 3, the invention suggests a method to transmit the push-pull signal through a multi-mode fibre 3. By slightly modifying the setup, here the diffractive optical elements 10, 20, it is also possible to transmit a focus error signal.

The invention concerns a compact, lightweight optical pickup head 1 for scanning or writing optical information carrier 9 as e.g. CD, DVD, magneto-optical disks and other formats. Due to the fact that it is difficult to transmit control signals, i.e. focus error and tracking error, through the fibres 3 as the spatial intensity distribution generated by the interaction of the disk 9 and the focus spot 15 will be scrambled in the fibre 3, photodetectors 2 and/or other focus and tracking error signal generating means are arranged remote from the optical pickup head 1 on the optical pickup.

It is an aspect of the invention to provide a compact, lightweight optical pickup head 1 for scanning or writing optical information carriers 9. According to the invention a fibre-coupled optical pickup is provided, which provides an optical track error signal via a multi-mode fibre 3 that is situated slightly off the optical axis 13. The optical pickup head 1 is exclusively coupled by fibres 3, 6 and the light source 4 as well as photodetectors 2 are arranged separate to the optical pickup head 1 so that a compact, lightweight optical pickup head 1 for scanning or writing optical information carrier 9 is formed. According to an embodiment also the focus error signal is provided via said multi-mode fibre 3.

## Claims

1. Device for reading and/or recording optical recording media (9) having an optical pickup head (1) for scanning the optical recording medium (9) with a scanning beam (5), a photodetector (2) arranged remote from the optical pickup head (1) for detecting a received beam (11) received from the optical recording medium (9), and an optical fibre (3) arranged between optical pickup head (1) and photodetector (2) for guiding the received beam (11) to the photodetector (2), wherein the axis of the optical fibre (3) is arranged off-centred with regard to the optical axis of the received beam (11).

2. Device according to claim 1, wherein the optical fibre is a multimode optical fibre (3).

3. Device according to claim 1 or 2, **characterised in that** the photodetector (2) is provided with annular zone detector elements (AZ1, ..., AZn).

4. Device according to claim 3, **characterised in that** several annular zones (AZ1, ..., AZn) are adaptively combined to form a super annular zone (SAZ1, ..., SAZn).

5. Device according to one of claims 1 to 4, **characterised in that** the pickup head (1) is provided with a diffractive optical element (10, 20) for focusing the received beam (11) onto the entrance (12) of the optical fibre.

6. Device according to one of claims 1 to 5, **characterised in that** the pickup head (1) is provided with a beam splitter (20) for generating partial detection beams (11U, 11L) and an optical coupler (30) for coupling the partial detection beams (11U, 11L) to the optical fibre (3).

7. Device according to claim 6, **characterised in that** the optical coupler (30) consists of a diffractive optical element (21), a lens array (22), and a coupling lens (23).
